# EUROPÄISCHE PATENTSCHRIFT

(11) **EP 2 643 415 B1**
(45) Veröffentlichungstag und Bekanntmachung des Hinweises auf die Patenterteilung: **26.10.2016**
(21) Anmeldenummer: 11807874.0
(22) Anmeldetag: 25.11.2011
(51) Int. Cl.: C09D 5/00

(54) **BESCHICHTUNGSMASSE MIT FUNKELEFFEKT**
COATING COMPOSITION WITH SPARKLE EFFECT
MATIÈRE DE REVÊTEMENT À EFFET SCINTILLANT

(30) Priorität: 26.11.2010 DE 102010052518
(43) Veröffentlichungstag der Anmeldung: 02.10.2013
(73) Patentinhaber: Brillux GmbH & Co. KG, 48163 Münster (DE)
(72) Erfinder: KRECHTING, Andreas, 48163 Schöppingen (DE)
(74) Vertreter: Cohausz & Florack
(86) Internationale Anmeldenummer: PCT/EP2011/071072
(87) Internationale Veröffentlichungsnummer: WO 2012/069651

(56) Entgegenhaltungen:
- WO-A1-01/48333
- WO-A1-02/40600
- WO-A1-2009/047076
- DE-A1-102005 032 346
- DE-A1-102005 050 094

## Beschreibung

Die Erfindung betrifft einen Mörtel oder Putzmörtel enthaltend ein Bindemittel sowie mindestens ein körniges Effektmittel. Die Erfindung betrifft ferner ein Verfahren zum Herstellen einer Effektbeschichtung sowie eine mit dem erfindungsgemäßen Verfahren hergestellte Effektbeschichtung.

Mörtel bzw. Putzmörtel der eingangs genannten Art sind grundsätzlich bekannt und umfassen die bei Bauwerken an Wand- und Deckenflächen ein- oder mehrlagig aufgetragenen Deckschichten, beispielsweise Putz.

Putz ist üblicherweise eine aus Sand, Wasser und Bindemittel bestehende Mörtelschicht, zum Teil mit Kunststoffzusätzen, die auf Innenwänden als Unterlage für Tapeten dient oder Außenwände gegen Witterungseinflüsse schützt. Vor der Verarbeitung werden dem Mörtelputz Dichtungsmittel zugesetzt, um die Feuchtigkeitsdurchlässigkeit herabzusetzen oder zu verhindern. Grundsätzlich teilt man Putze in zwei Kategorien, nämlich Dickschicht- und Dünnschichtputz ein:
Bei Dickschichtputzen beträgt der Materialauftrag in der Regel mehr als 10mm. Grundputz (Unterputz) wird in der Regel direkt auf das Mauerwerk oder Beton in Stärken von 2-3cm (Innenbereich) aufgetragen und gleicht alle groben Unebenheiten aus. Auch Rohre und Kabel werden oftmals in Grundputz eingebettet. Der Grundputz ist sehr fest und dient als Träger für Oberputze (Edelputze). Grundputze bestehen meist aus Kalkzement- bzw. Gipsputz, wobei Kalkzement in Feuchträumen als Grundputz für Fliesen verwendet wird, während in anderen Räumen der Gipsputz als geglätteter Untergrund für Tapeten, Anstriche oder Edelputze zum Einsatz kommt.

Dünnschichtputze werden Putze genannt, die einen Materialauftrag von weniger als 10mm aufweisen. Oberputze (auch Edelputze genannt) werden in relativ dünnen Schichten von 1-5mm auf den Grundputz aufgetragen. Sie haben eine optische und/oder schützende Funktion.

Es ist bekannt, farbigen Putz als Gestaltungs- oder Dekorationselement zu nutzen. Im einfachsten Fall werden dem Putz Farbstoffe zugegeben. Auch bekannt ist Farbputz herzustellen, der farbige Plastpartikel oder Glimmer als Effektmittel enthält. Die vorgenannten Effektmittel sind von geringer Härte, was aus verschiedenen Gründen nachteilig ist. So lassen sich farbige Putze, die mit weichen Effektmitteln ausgerüstet sind, wegen einer zu erwartenden Beschädigung der Effektbeschichtung nur schwer reinigen. Eine Verschmutzung der Putzoberfläche lässt sich aber auch nicht durch einfaches Überstreichen der verschmutzten Oberfläche beseitigen, da hierbei die Effektmittel überdeckt würden. Folglich verliert die Oberfläche farbiger Putze mit weichen Effektmitteln bedingt durch Alterungsprozesse bzw. Schmutzablagerungen im Laufe der Zeit an Attraktivität.

Putze auf Basis einer Bindemitteldispersion mit farbigen Quarzkörnern, weiteren Zusätzen und Wasser zählen ebenfalls zum Stand der Technik und werden als Buntsteinputz bezeichnet. Der fertig gemischte Putz wird mit der Kelle auf einen Untergrund aufgetragen und glatt gestrichen. Die an die Sichtoberfläche angrenzenden Quarzkörner verleihen dem Putz ein farbiges Aussehen. Die DE 10152 060 A1 beschreibt einen Farbputz, der farbige Glaskugeln als Effektmittel enthält. Mit diesem Farbputz soll eine flächige Verbesserung der Leuchtkraft bzw. ein Bunteffekt erzielt werden. Der optische Effekt ist unabhängig vom Betrachtungswinkel, so dass der Farbputz keinen Funkeleffekt erzielt.

Die WO 2009/047076 beschreibt wässrige, pigmentfreie Polymerdispersionen, die mit Fluoreszenzfarbstoffen markiert sind zur Verwendung in Markierungsmitteln, Beschichtungsstoffen, Klebstoffen, Dichtungsmassen, Druckfarben, Papierstreichmassen und Papierleimungsmitteln.

Aus der DE 10 2005 050 094 A1 ist ein farbiges Effektpigment mit einer Schicht aus diskreten Metallteilchen zur Verwendung in Farben, Lacken, Pulverlacken, Druckfarben, Kunststoffen, kosmetischen Formulierungen, keramischen Materialien, Papier, Gläsern oder Sicherheitsanwendungen bekannt.

Die WO2001/48333 A1 beschreibt ein Verfahren zur Herstellung von Oberflächenelementen, wobei eine partikelhaltige Schutzschicht durch Spray-, Roll-, Curtain- oder Eintauchbeschichtung auf die Oberfläche eines Dekors aufgetragen wird.

Aus der WO2002/40600 sind Kippfarben-Pigmente und Folien mit lumineszierender Beschichtung bekannt.

Die DE 10 2005 032 346 A1 beschreibt Perlglanzpigmente mit vernetzbarer Bindemittelbschichtung, welche in Farben, Lacken, Pulverlacken, Druckfarben, Kunststoffen oder kosmetischen Formulierungen wie Nagellack Verwendung finden können.

Der Erfindung lag die Aufgabe zugrunde, einen Mörtel oder Putzmörtel bereit zu stellen, dessen Oberfläche sich durch einen Funkeleffekt auszeichnet und die darüber hinaus leicht zu reinigen ist.

Diese Aufgabe wird gelöst durch einen Mörtel oder Putzmörtel gemäß Patentanspruch 1. Bei dem erfindungsgemäßen Mörtel oder Putzmörtel handelt es sich bevorzugt um einen Dünnschichtputzmörtel. Putzmörtel im Sinne der Erfindung sind insbesondere härtbare Baustoffe, die mindestens ein Bindemittel sowie einen Füllstoff enthalten. Putzmörtel können darüber hinaus insbesondere Wasser enthalten sowie gegebenenfalls Zusatzstoffe und/oder Zusatzmittel. Die Härtung des Putzmörtels kann durch geeignete chemische oder physikalische Vorgänge erfolgen, insbesondere durch chemische Reaktion. In letzteren Fall erfolgt die chemische Reaktion des Bindemittels.

Der erfindungsgemäße Mörtel oder Putzmörtel zeichnet sich dadurch aus, dass sie ein Effektmittel enthält, das eine Mohshärte von mehr als sieben sowie mindestens eine lichtbrechende und/oder lichtreflektierenden Fläche aufweist. Die lichtbrechende bzw. lichtreflektierende Fläche des Effektmittels verleiht der Sichtoberfläche des Mörtels bzw. Putzmörtels ein dekoratives, funkelndes Erscheinungsbild, dessen Wirkung insbesondere bei direktem Lichteinfall zum tragen kommt.

Das dekorative, funkelnde Erscheinungsbild des Mörtels bzw. Putzmörtels Beschichtungsmasse kann insbesondere dadurch erreicht werden, dass die lichtbrechenden bzw. lichtreflektierenden Flächen des Effektmittels glänzend sind. In diesem Zusammenhang ist Glanz als die Eigenschaft einer Oberfläche zu verstehen, Licht ganz oder teilweise spiegelnd zu reflektieren. Glanz entsteht insbesondere dann, wenn sowohl die Beleuchtung gebündelt ist, als auch die Oberfläche spiegelnd reflektiert. Dadurch erscheint jeder Punkt der Oberfläche aus unterschiedlichen Betrachtungswinkeln unterschiedlich hell, und Lichtreflexe verändern sich mit der Bewegung des Betrachters.

Der mit den Effektmitteln vorzugsweise erreichte Funkel- oder Glitzer-Effekt kann auch durch lokale, hochglänzende, kleine Oberflächen erreicht werden. Je nach Betrachtungswinkel, Lichteinfall und Orientierung kann dabei ein unterschiedlicher Satz an gleich orientierten kleinen Oberflächen reflektieren, so dass für den Betrachter jeweils unterschiedliche Glanzpunkte entstehen.

Unter Glanz wird allgemein der Quotient aus dem gerichtet und dem diffus reflektierten Anteil des auf eine Fläche fallenden Lichtstroms verstanden. Eine gerichtete Reflexion tritt vor allem bei glatten Oberflächen auf, während das Licht an rauen Oberflächen in der Regel diffus zurückgestreut wird. Die mindestens eine lichtreflektierende bzw. lichtbrechende Fläche des Effektmittels ist vorzugsweise also glatt genug, damit eine gerichtete Reflexion stattfinden kann. Darüber hinaus ist die mindestens eine lichtreflektierende bzw. lichtbrechende Fläche des Effektmittels vorzugsweise möglichst eben bzw. weist eine möglichst geringe Krümmung auf. Dadurch kann ein höheres Maß an gerichteter Reflektion erzielt werden. Geeignete glatte Oberflächen an dem Effektmittel können beispielsweise durch Splittern oder Schleifen der Einzelpartikel des Effektmittels erzeugt werden.

Neben der Reflexion des Lichts an der Oberfläche des Effektmittels kann auch ein gewisser Anteil des Lichtes transmittiert und dabei gebrochen werden. Beispielsweise kann eintreffendes Licht an einer ersten Oberfläche eines kristallinen, transparenten Effektmittels gebrochen werden und anschließend an einer weiteren Oberfläche aufgrund von Totalreflexion reflektiert werden. Auch dies kann zum Glanz oder Funkeln des Partikels führen.

Das Effektmittel zeichnet sich durch eine hohe Härte von mindestens sieben Mohs aus. Der Einsatz eines Effektmittels mit einer hohen Härte ist aus verschiedenen Gründen vorteilhaft. So weist das Effektmittel eine hohe Beständigkeit auf, so dass der mit ihm erzielte dekorative Effekt dauerhaft und witterungsunabhängig ist. Darüber hinaus lässt sich die erfindungsgemäße Effektbeschichtung aufgrund der hohen Härte des Effektmittels auf einfache Art und Weise, beispielsweise durch Sandstrahlen, reinigen ohne das Effektmittel beschädigt wird.

Die Herstellung der erfindungsgemäßen Effektbeschichtung erfolgt gemäß einer bevorzugten Ausführungsform der Erfindung wie folgt:
Zunächst wird der erfindungsgemäße Mörtel oder Putzmörtel auf dem Fachmann bekannte Weise auf einen Untergrund, beispielsweise eine Wand- oder Deckenfläche, aufgebracht. Anschließend wird die Beschichtungsmasse zumindest teilweise ausgehärtet. Daraufhin wird die Oberfläche des ausgehärteten Mörtels bzw. Putzmörtels mechanisch bearbeitet, so dass zumindest ein Teil der Licht reflektierenden Fläche des Effektmittels freigelegt wird. Die mechanische Bearbeitung der Oberfläche des ausgehärteten Mörtels bzw. Putzmörtels erfolgt vorzugsweise mit einem Schleifmittel.

Das Schleifmittel hat zweckmäßigerweise eine geringere Härte als das Effektmittel aber eine höhere Härte als das in dem Mörtel bzw. Putzmörtel enthaltene Bindemittel. Durch die Behandlung der Oberfläche mit einem Schleifmittel werden die Licht reflektierenden Flächen des Effektmittels freigelegt, was der Sichtoberfläche des Mörtels bzw. Putzmörtels ein dekoratives, funkelndes Aussehen verleiht.

Wird die erfindungsgemäße Effektbeschichtung gemäß dem oben beschriebenen Verfahren hergestellt, kommt ein weiterer Vorteil der hohen Härte des Effektmittels zum tragen. So ermöglicht die Verwendung eines Effektmittels mit einer Mohs Härte von mehr als 7 den Einsatz von herkömmlichen Schleifmitteln, beispielsweise Schleifvliesen bzw.

Stahlwolle, zum Freilegen der lichtreflektierenden bzw. lichtbrechenden Flächen. Mit diesen Schleifmitteln ist eine schnelle und einfache Behandlung des Mörtels bzw. Putzmörtels möglich.

Bei der Verwendung weicher Effektmittel ist der Einsatz vergleichsweise harter Schleifmittel, wie Schleifvliesen bzw. Stahlwolle nicht zweckmäßig, da hierbei die Oberfläche des Effektmittels eingeebnet und/oder zerkratzt wird.

Das Freilegen der lichtreflektierenden Flächen wird im erfindungsgemäßen Verfahren nach dem Aushärten des Mörtels bzw. Putzmörtels vorgenommen. Unter Aushärtung wird hierbei eine teilweise oder vollständige Aushärtung des Mörtels bzw. Putzmörtels verstanden. Normalerweise erfolgt die Aushärtung nach etwa einem Tag.

Ein weiterer Vorteil der Verwendung eines Effektmittels mit hoher Härte besteht darin, dass die Menge an Effektmittel gering gehalten werden und dennoch ein eindrucksvoller Funkeleffekt erzielt werden kann. Dies kommt dadurch zustande, dass durch die Behandlung mit dem Schleifmittel die Oberflächen auch von innen liegendem Effektmittel freigelegt werden und zum Funkeleffekt beitragen.

Das Effektmittel kann die gleiche Farbe wie der Mörtel bzw. Putzmörtel aufweisen. Erfindungsgemäß bevorzugt ist jedoch der Einsatz von Effektmittel, das einen farblichen Kontrast zum Mörtel bzw. Putzmörtel aufweist.

Praktische Versuche haben ergeben, dass mit Effektmitteln, die mindestens sechs, vorzugsweise mindestens acht lichtreflektierende bzw. lichtbrechende Flächen aufweisen, besonders eindrucksvolle Funkeleffekte erzielt werden können. Durch das Freilegen der lichtreflektierenden bzw. lichtbrechenden Flächen derartiger Effektmittel entsteht nämlich eine Sichtoberfläche, deren Erscheinungsbild sich je nach Betrachtungswinkel bzw. Lichteinfall verändert und aus diesem Grund besonders eindrucksvoll funkelt.

Besonders bevorzugt ist auch die Verwendung von kantigem und/oder splittrigem Effektmittel. Derartige Effektmittel weisen nämlich eine Vielzahl von lichtreflektierenden Flächen auf, so dass mit ihnen besonders wirkungsvolle optische Effekte erzielt werden können.

Ein weiterer Vorteil des erfindungsgemäßen Mörtels oder Putzmörtels liegt darin, dass ihre Sichtoberfläche bei Verschmutzung auf einfache Weise gereinigt werden kann. So kann gemäß einer weiteren bevorzugten Ausführungsform der Erfindung eine verschmutzte Sichtoberfläche zur Reinigung einfach mit einem Schleifmittel bearbeitet werden, wobei eine neue, unverschmutzte Sichtoberfläche freigelegt wird. Das Schleifmittel weist zweckmäßigerweise eine geringere Härte als das Effektmittel aber eine höhere Härte als das Bindemittel auf. Aufgrund der hohen Härte des Effektmittels kann ein herkömmliches Schleifmittel, beispielsweise Schleifvliese bzw. Stahlwolle, eingesetzt werden ohne dass es zu einem Verkratzen oder Einebnen der Oberfläche des Effektmittels kommt. Mit dieser Ausführungsform der Erfindung ist es somit auf einfache Weise möglich die Sichtoberfläche des erfindungsgemäßen Mörtels oder Putzmörtels zu reinigen.

Eine Reinigung verschmutzter Sichtoberflächen ist auch gemäß einer weiteren bevorzugten Ausführungsform der Erfindung möglich. So kann zur Reinigung der Sichtoberfläche zunächst ein herkömmliches Anstrichmittel, beispielsweise ein Putz oder eine Farbe aufgebracht werden. Bei diesem Schritt wird eine erneuerte, saubere Sichtoberfläche geschaffen. Das Effektmittel wird zunächst verdeckt, kann jedoch anschließend durch einfaches Bearbeiten der Sichtoberfläche, beispielsweise mit einem Schleifmittel, wieder freigelegt werden. Hierdurch wird eine erneuerte Sichtoberfläche mit Funkeleffekt erhalten.

Praktische Versuche haben gezeigt, dass Mörtel bzw. Putzmörtel mit besonders dekorativen Oberflächen erhalten werden können, wenn als Effektmittel Korund, vorzugsweise Edelkorund, Siliziumcarbid, Topas, Quarz und/oder Diamant eingesetzt werden. Als besonders bevorzugt hat sich dabei Korund erwiesen. Die vorgenannten Effektmittel zeichnen sich durch eine große Härte von mehr als 7 Mohs aus. Werden die Effektmittel in körniger bzw. splittriger Form eingesetzt, kann ein besonders starker Funkeleffekt erzielt werden.

Die Menge des Effektmittels in der Beschichtungsmasse kann, je nach beabsichtigter Stärke des Funkeleffekts, in weiten Bereichen variieren. So kann das Effektmittel in einer Menge von 1-40 Gew.%, vorzugsweise von 5-30 Gew.%, und insbesondere von 10-25 Gew.%, jeweils bezogen auf die Gesamtmenge des Mörtels bzw. Putzmörtels enthalten sein.

Der mittlere Korndurchmesser des Effektmittels kann ebenfalls in weiten Bereichen schwanken. Besonders gute Ergebnisse werden mit einem Effektmittel erzielt, das einen mittleren Korndurchmesser von 1-4 mm, vorzugsweise von 0,2 bis 6 mm aufweist.

Als Bindemittel können alle gängigen wässrigen Polymerdispersionen oder in Wasser redispergierbaren Polymerpulver aller üblichen Harztypen eingesetzt werden, wobei redispergierbar bedeutet, dass die nach der Trocknung erhaltenen Agglomerate bei Zugabe in Wasser wieder in die Primärteilchen zerfallen, welche dann im Wasser dispergiert werden.

Geeignete Polymerisate sind insbesondere solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide. Es können auch Gemische der vorgenannten Polymere eingesetzt werden. Bevorzugte Vinylester sind Vinylacetat, Vinylpropionat, Vinylbutyrat, Vinyl-2-etylhexanoat, Vinyllaurat, 1-Metylvinylacetat, Vinylpivalat und Vinylester von alphaverzweigten Monocarbonsäuren mit 5-11 C-Atomen. Bevorzugte Metacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylmethylacrylat. Als Vinylaromaten bevorzugt sind Styrol, Methylstyrol und Vinylthiol. Bevorzugtes Vinylhalogenid ist Vinylchlorid. Bevorzugte Olefine sind Ethylen, Propylen und bevorzugte Diene sind 1,3 Butadien und Isopren.

Als organisches Bindemittel eignet sich beispielsweise eine Polymerdispersion auf der Basis eines Vinylacetats. Die Polymerdispersion kann vorzugsweise eine Dispersion eines Homo-, Co-, und Terpolymers sein. Das Copolymerisat kann vorzugsweise aus Vinylacetat und Ethylen gebildet sein. Erfindungsgemäß besonders bevorzugt eingesetzt werden Vinylacetate, Styrolacrylate, Acrylate.

Die Herstellung der Polymerisate erfolgt in an sich bekannter Weise, vorzugsweise nach dem Emulsionspolymerisationsverfahren, wie beispielsweise in der WO-A 94/20661 beschrieben. Es können mit Emulgator stabilisierte Dispersionen eingesetzt werden oder auch mit Schutzkolloid stabilisierte Dispersionen. Zur Herstellung der Pulver wird die Polymerdispersion beispielsweise mittels Sprühtrocknung, Gefriertrocknung oder durch Koagulation der Dispersion und anschließende Wirbelschichttrocknung getrocknet.

Im Allgemeinen wird das Bindemittel in Form einer wässrigen Polymerdispersion oder eines in Wasser redispergierbaren Polymerpulvers in einer Menge von 5-15 Gew.%, bevorzugt 0,1-8 Gew.%, insbesondere 6-7 Gew.%, jeweils Polymeranteil bezogen auf die Gesamtmenge der Beschichtungsmasse, eingesetzt.

Es können übliche Fällungsmittel, beispielsweise Kalkhydrat und/oder Füllstoffe mit hoher Oberfläche eingesetzt werden. Die Fällungsmittel eignen sich zum Lösen von Schutzkolloiden von den Dispersionsteilchen.

Alternativ kann der Mörtel bzw. Putzmörtel auch ein anorganisches Bindemittel auf Basis von Wasserglas, hydraulischem Zement und/oder Kalk enthalten, vorzugsweise in einer Menge von 5-15
Gew.%, bevorzugt 0,1-8 Gew.% jeweils Feststoffanteil, bezogen auf den Mörtel bzw. Putzmörtel enthalten.

Neben dem Bindemittel und dem Effektmittel kann der Mörtel bzw. Putzmörtel noch die üblichen Rezepturbestandteile wie Füllstoffe, insbesondere Fasern, Natursand, Brechsand, Leichtsand, Kalzit, Dolomit, Quarz, Glimmer, Talk, Bims, Perlit und/oder Zusatzstoffe (Additive), vorzugsweise Netzmittel, Dispergiermittel, Entschäumer, Konservierungsmittel, Filmbildner, Verdickungsmittel, Wasser, Pigmente, Algizide, Fungizide enthalten. Neben diesen Füllstoffen und Zusatzstoffen kann die erfindungsgemäße Beschichtungsmasse auch Flammschutzmittel enthalten. Diese Flammschutzmittel verleihen der aufgetragen Schicht feuerfeste Eigenschaften.

Bei den Füllstoffen wird zwischen grobkörnigen, mit einem Korndurchmesser von kleiner oder gleich 150 µm, und feinkörnigen Füllstoffen, Korndurchmesser größer 150 µm, unterschieden.

Art und Menge der Rezepturbestandteile der Mörtel bzw. Putzmörtel sind dem Fachmann bekannt. Im Allgemeinen enthalten die Mörtel bzw. Putzmörtel neben dem Bindemittel und Effektmittel noch 25-83 Gew.% Füllstoff, 0,05-1 Gew.% Verdickungsmittel, 1-10 Gew.% Pigment, 10-50 Gew.% Wasser je nachdem, ob ein pastöser Mörtel bzw. Putzmörtel oder ein trockener Mörtel bzw. Putzmörtel hergestellt werden soll, sowie weitere Hilfsmittel, wobei sich die Anteile in Gew.% in der Rezeptur jeweils auf 100 Gew.% aufaddieren.

Vorzugsweise enthält der Mörtel bzw. Putzmörtel 20-90 Gew.% Füllstoff, insbesondere 25-83 Gew.% Füllstoff, insbesondere 30-60 Gew.% Füllstoff. Vorzugsweise enthält der Mörtel bzw. Putzmörtel 0,01-5 Gew.% Verdickungsmittel, besonders bevorzugt 0,02-1,5 Gew.% Verdickungsmittel, insbesondere 0,05-1 Gew.% Verdickungsmittel. Vorzugsweise enthält der Mörtel bzw. Putzmörtel 0,5-15 Gew.% Pigment, besonders bevorzugt 1-10 Gew.% Pigment, insbesondere 2-8 Gew.% Pigment. Vorzugsweise enthält der Mörtel bzw. Putzmörtel 5-50 Gew.% Wasser, besonders bevorzugt 8-30 Gew.% Wasser insbesondere 10-15 Gew.% Wasser.

Der Mörtel bzw. Putzmörtel kann sowohl in Innenräumen als auch auf Flächen, die einer Witterung ausgesetzt sind, Anwendung finden. Die mit dem Effektmittel ausgestatteten erfindungsgemäßen Mörtel bzw. Putzmörtel eignen sich zum Beschichten von Wand- oder Deckenflächen und können sowohl als Unterputz- als auch als Deckputz eingesetzt werden. Besonders zweckmäßig ist die Verwendung als Deckputz. Hierzu wird der Mörtel bzw. Putzmörtel vorzugsweise in einer Stärke von 1 mm und 6 mm aufgebracht.

Das nachfolgende Beispiel dient zur weiteren Erläuterung der Erfindung.

### Beispiel 1: Rezeptur Beschichtungsmasse

| | |
|---|---|
| Lösungsmittel (Wasser): | 5-15 Gew.% |
| Additive: | 2-5 Gew.% |
| Flammschutzmittel: | 0-15 Gew.% |
| Füllstoffe (<150 µm): | 10-30 Gew.% |
| Körnungen und | |
| Füllstoffe (>150 µm): | 10-60 Gew.% |
| Bindemittel (ca 50 %ig): | 8-20 Gew.% |
| Effektmittel: | 1-10 Gew.% |

In der zugehörigen Zeichnung zeigen:
- Fig. 1: Eine Wandfläche, die mit dem erfindungsgemäßen Mörtel bzw. Putzmörtel beschichtet wurde im schematisierten Querschnitt.
- Fig. 2: Eine erfindungsgemäße Effektbeschichtung (2'), in der ein Teil der lichtreflektierenden Flächen des Effektmittels (3) durch Schleifen der Oberfläche des gehärteten Mörtels bzw. Putzmörtels freigelegt wurde.

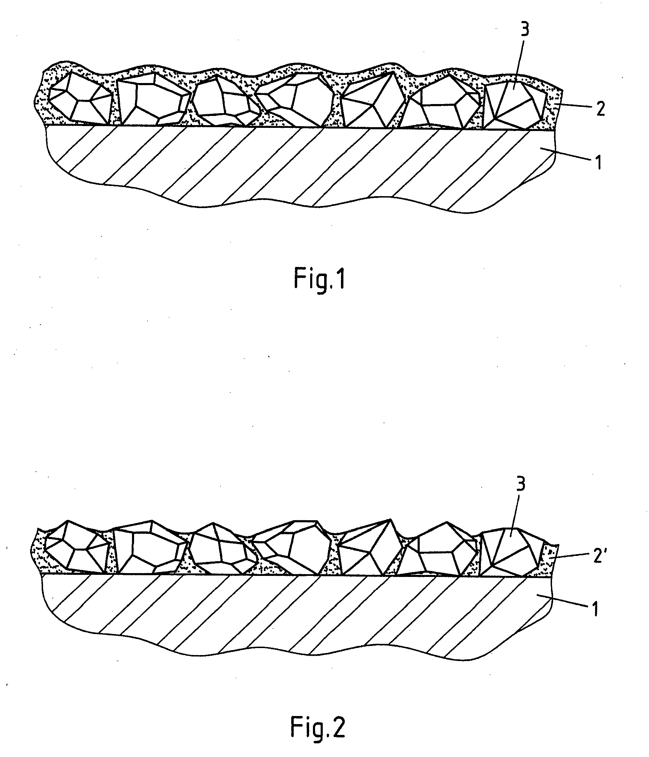

Figur 1 zeigt eine mit dem erfindungsgemäßen Mörtel bzw. Putzmörtel beschichtete Wandfläche. Die Wandfläche besteht im Beispiel aus einer Ziegelwand. Diese wurde mit einer Beschichtungsmasse der Zusammensetzung aus Beispiel 1 beschichtet.

Figur 2 zeigt eine Effektbeschichtung (2'), in der ein Teil der lichtreflektierenden Fläche des Effektmittels (3) durch Schleifen mit einem Schleifvlies freigelegt wurde. Aus Figur 2 geht hervor, wie durch das Freilegen der lichtreflektierenden Flächen des Effektmittels (3) der Glitzereffekt verstärkt werden kann.

### Bezugszeichenliste

- 1: Wandfläche
- 2: Effektbeschichtung
- 2': Effektbeschichtung mit teilweise freigelegtem Effektmittel
- 3: Effektmittel

## Patentansprüche

1. Mörtel oder Putzmörtel enthaltend ein Bindemittel, ausgewählt aus wässrigen Polymerdispersionen oder in Wasser redispergierbarem Polymerpulver oder einem anorganischen Bindemittel auf Basis von Wasserglas, hydraulischem Zement und/oder Kalk, ferner enthaltend einen oder mehrere Füllstoffe sowie mindestens ein körniges Effektmittel (3), das einen Funkel- oder Glitzereffekt erzielt, **dadurch gekennzeichnet, dass** das Effektmittel (3) eine Mohshärte von mehr als 7 sowie mindestens sechs Licht brechende und/oder Licht reflektierende Flächen aufweist, die glatt genug sind, damit eine gerichtete Reflexion stattfinden kann.

2. Mörtel oder Putzmörtel nach Anspruch 1, **dadurch gekennzeichnet, dass** das Effektmittel (3) eine Mohshärte von mindestens 7,5, vorzugsweise von mindestens 8, noch bevorzugter von mindestens 9 aufweist.

3. Mörtel oder Putzmörtel nach Anspruch 1 oder 2, **dadurch gekennzeichnet, dass** das Effektmittel (3) Korund, vorzugsweise Edelkorund, Siliciumcarbid, Hartglas, Topas und/oder Diamant enthält.

4. Mörtel oder Putzmörtel nach einem der Ansprüche 1 bis 3, **dadurch gekennzeichnet, dass** das Effektmittel (3) in einer Menge von 1 bis 40 Gew.%, bezogen auf die Gesamtmenge des Mörtels oder Putzmörtels, enthalten ist.

5. Mörtel oder Putzmörtel nach einem der Ansprüche 1 bis 4, **dadurch gekennzeichnet, dass** das Effektmittel (3) einen mittleren Korndurchmesser von 1 bis 4 mm, vorzugsweise von 0,2 bis 6 mm, aufweist.

6. Mörtel oder Putzmörtel nach einem der Ansprüche 1 bis 5, **dadurch gekennzeichnet, dass** er ein organisches Bindemittel, vorzugsweise eine Polymerdispersion auf Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide, insbesondere Styrolacrylate und/oder Styrol-Copolymere, enthält.

7. Mörtel oder Putzmörtel nach einem der Ansprüche 1 bis 5, **dadurch gekennzeichnet, dass** er ein anorganisches Bindemittel auf Basis von Wasserglas, hydraulischem Zement und/oder Kalk in einer Menge von 5-15 Gew.%, bezogen auf die Gesamtmenge des Mörtels oder Putzmörtels enthält.

8. Mörtel oder Putzmörtel nach einem der Ansprüche 1 bis 7, **dadurch gekennzeichnet, dass** er einen oder mehrere Füllstoffe, ausgewählt aus Fasern, Natursand, Brechsand, Leichtsand, Calcit, Dolomit, Quarz, Glimmer, Talk, Bims, Perlit, Blähton enthält.

9. Verfahren zum Herstellen einer Effektbeschichtung auf Wand-, Boden- oder Deckenflächen, insbesondere von Bauwerken, umfassend folgende Schritte
- Aufbringen eines Mörtels oder Putzmörtels enthaltend ein Bindemittel, ausgewählt aus wässrigen Polymerdispersionen oder in Wasser redispergierbarem Polymerpulver oder einem anorganischen Bindemittel auf Basis von Wasserglas, hydraulischem Zement und/oder Kalk, ferner enthaltend einen oder mehrere Füllstoffe sowie mindestens ein körniges Effektmittel (3), das einen Funkel- oder Glitzereffekt erzielt und das mindestens sechs Licht brechende und/oder Licht reflektierende Fläche aufweist, die glatt genug sind, damit eine gerichtete Reflexion stattfinden kann auf die Wand- oder Deckenflächen;
- Aushärten des Mörtels oder Putzmörtels;
- Freilegen zumindest eines Teils der Licht reflektierenden Fläche des Effektmittels (3) durch mechanische Bearbeitung der Oberfläche des gehärteten Mörtels oder Putzmörtels.

10. Effektbeschichtung (2') hergestellt nach einem Verfahren nach Anspruch 9.

## Claims

1. Mortar or plaster, containing a binder, selected from aqueous polymer dispersions or a polymer powder redispersible in water or an inorganic binder, based on water glass, hydraulic cement and/or lime, further comprising one or more fillers and at least a granular effect-provoking agent(3), which causes a sparkling or glittering effect, **characterised in that** the effect-provoking agent (3) has a Mohs hardness greater than 7, and at least six light-refracting and/or light-reflecting surfaces that are smooth enough to allow directed reflection.

2. Mortar or plaster according to Claim 1, **characterised in that** the effect-provoking agent (3) has a Mohs hardness of at least 7.5, preferably at least 8, more preferably at least 9.

3. Mortar or plaster according to Claim 1 or 2, **characterised in that** the effect-provoking agent (3) contains corundum, preferably special fused aluminium oxide, silicon carbide, hard glass, topaz and/or diamond.

4. Mortar or plaster according to any one of Claims 1 to 3, **characterised in that** the quantity of the effect-provoking agent (3) contained is 1 to 40 percent by weight, based on the total amount of the mortar or plaster.

5. Mortar or plaster according to any one of Claims 1 to 4, **characterised in that** the effect-provoking agent (3) has an average particle diameter of 1 to 4 mm, preferably 0.2 to 6 mm.

6. Mortar or plaster according to any one of Claims 1 to 5, **characterised in that** it contains an organic binder, preferably a polymer dispersion, based on one or more monomers from the group, comprising vinyl esters of unbranched or branched alkyl carboxylic acids, having 1 to 15 C atoms, methacrylic esters and acrylic esters of alcohols having 1 to 10 C atoms, vinyl aromatics, olefins, dienes and vinyl halides, in particular, styrene acrylates and/or styrene copolymers.

7. Mortar or plaster according to any one of Claims 1 to 5, **characterised in that** it contains 5-15 percent by weight of an inorganic binder, based on water glass, hydraulic cement and/or lime, based on the total amount of the mortar or plaster.

8. Mortar or plaster according to any one of Claims 1 to 7, **characterised in that** it contains one or more fillers, selected from fibres, natural sand, crushed sand, light sand, calcite, dolomite, quartz, mica, talc, pumice, perlite and expanded clay.

9. Method for producing an effect coat on wall areas, floor areas or ceiling areas, in particular, of buildings, comprising the following steps:
- Applying a mortar or plaster, containing a binder, selected from aqueous polymer dispersions or a polymer powder redispersible in water or an inorganic binder, based on water glass, hydraulic cement and/or lime, further comprising one or more fillers and at least a granular effect-provoking agent (3), which causes a sparkling or glittering effect, and has at least six light-refracting and/or light-reflecting surfaces that are smooth enough to allow directed reflection on the wall or ceiling;
- curing of the mortar or plaster;
- exposing at least a portion of the light-reflecting surface of the effect-provoking agent (3) by mechanical processing of the surface of the hardened mortar or plaster.

10. Effect coat (2'), produced by a method according to Claim 9.

## Revendications

1. Mortier ou mortier d'enduit contenant un liant choisi parmi des dispersions aqueuses de polymère ou des poudres de polymère pouvant être redispersées dans l'eau, ou un liant inorganique à base de verre soluble, de ciment hydraulique et / ou de chaux, contenant, de plus, une ou plusieurs matières de remplissage ainsi qu'au moins une matière granulaire, provoquant un effet (3), qui réalise un effet scintillant ou luisant,
**caractérisé en ce que** la matière provoquant un effet (3) présente une dureté selon l'échelle de Mohs de plus de 7, ainsi qu'au moins six surfaces réfractant la lumière et / ou réfléchissant la lumière, qui sont suffisamment lisses pour qu'une réflexion dirigée puisse avoir lieu.

2. Mortier ou mortier d'enduit selon la revendication 1,
**caractérisé en ce que** la matière provoquant un effet (3) présente une dureté selon l'échelle de Mohs d'au moins 7,5, de préférence d'au moins 8, encore plus préférentiellement d'au moins 9.

3. Mortier ou mortier d'enduit selon revendication 1 ou 2,
**caractérisé en ce que** la matière provoquant un effet (3) contient du corindon, de préférence du corindon noble, du carbure de silicium, du verre de silice, de la topaze et / ou du diamant.

4. Mortier ou mortier d'enduit selon l'une des revendications 1 à 3,
**caractérisé en ce que** la matière provoquant un effet (3) est contenu dans une quantité de 1 à 40 % en poids par rapport à la quantité totale de mortier ou de mortier d'enduit.

5. Mortier ou mortier d'enduit selon l'une des revendications 1 à 4,
**caractérisé en ce que** la matière provoquant un effet (3) présente un diamètre moyen de grain de 1 à 4 mm, de préférence de 0,2 à 6 mm.

6. Mortier ou mortier d'enduit selon l'une des revendications 1 à 5,
**caractérisé en ce que** celui-ci contient un liant organique, de préférence une dispersion polymère à base d'un ou de plusieurs monomères du groupe comprenant les esters vinyliques d'acides alkycarboxyliques non ramifiées ou ramifiées, ayant 1 à 15 atomes C, les esters d'acide méthacrylique et les esters d'acide acrylique d'alcool ayant 1 à 10 atomes C, les aromates vinyliques, l'oléfine, les dioléfines et les halogénures de vinyle, en particulier les acrylates de styrène et / ou les copolymères de styrène.

7. Mortier ou mortier d'enduit selon l'une des revendications 1 à 5,
**caractérisé en ce que** celui-ci contient un liant inorganique à base de verre soluble, de ciment hydraulique et / ou de chaux, dans une quantité de 5 à 15 % en poids par rapport à la quantité totale de mortier ou de mortier d'enduit.

8. Mortier ou mortier d'enduit selon l'une des revendications 1 à 7,
**caractérisé en ce que** celui-ci contient une ou plusieurs matières de remplissage, choisies parmi des fibres, du sable naturel, du sable de concassage, du sable de faible poids, de la calcite, de la dolomite, du quartz, du mica, du talc, de la pierre ponce, de la perlite, d'argile expansée.

9. Procédé de fabrication d'un revêtement provoquant un effet sur des surfaces de murs, de sols ou de plafonds, en particulier de bâtiments, qui comprend les étapes suivantes :
- application d'un mortier ou d'un mortier d'enduit comprenant un liant, choisi parmi des dispersions aqueuses de polymère ou des poudres de polymère pouvant être redispersées dans l'eau, ou un liant inorganique à base de verre soluble, de ciment hydraulique et / ou de chaux, contenant, de plus, une ou plusieurs matières de remplissage ainsi qu'au moins une matière granulaire, provoquant un effet (3), qui réalise un effet scintillant ou luisant, et qui présente au moins six surfaces réfractant la lumière et / ou réfléchissant la lumière, qui sont suffisamment lisses pour qu'une réflexion dirigée puisse avoir lieu sur les surfaces de murs ou de plafonds ;
- durcissement du mortier ou du mortier d'enduit ;
- dégagement d'au moins une partie de la surface de la matière provoquant un effet (3) réfléchissant la lumière, par traitement mécanique de la surface du mortier ou du mortier d'enduit durci.

10. Revêtement provoquant un effet (2') fabriqué conformément à un procédé selon la revendication 9.
